(19) Europäisches Patentamt European Patent Office Office européen des brevets

(11) **EP 3 868 175 B1**

(12) **EUROPÄISCHE PATENTSCHRIFT**

(45) Veröffentlichungstag und Bekanntmachung des Hinweises auf die Patenterteilung:
**26.06.2024   Patentblatt 2024/26**

(21) Anmeldenummer: **19790304.0**

(22) Anmeldetag: **16.10.2019**

(51) Internationale Patentklassifikation (IPC):
***H05B 6/06*** (2006.01)

(52) Gemeinsame Patentklassifikation (CPC):
**H05B 6/062;** H05B 2213/03; H05B 2213/05; H05B 2213/07

(86) Internationale Anmeldenummer:
**PCT/IB2019/058821**

(87) Internationale Veröffentlichungsnummer:
**WO 2020/079611 (23.04.2020 Gazette 2020/17)**

(54) **INDUKTIONSVORRICHTUNG**

INDUCTION DEVICE

DISPOSITIF À INDUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2018   ES 201831012**

(43) Veröffentlichungstag der Anmeldung:
**25.08.2021   Patentblatt 2021/34**

(73) Patentinhaber: **BSH Hausgeräte GmbH**
**81739 München (DE)**

(72) Erfinder:
• **CARRETERO CHAMARRO, Claudio**
**50003 Zaragoza (ES)**
• **HERNANDEZ BLASCO, Pablo Jesus**
**50019 Zaragoza (ES)**
• **LASOBRAS BERNAD, Javier**
**50016 Ejea De Los Caballeros (Zaragoza) (ES)**
• **LOPE MORATILLA, Ignacio**
**50010 Zaragoza (ES)**
• **MARTIN GOMEZ, Damaso**
**50012 Zaragoza (ES)**

(56) Entgegenhaltungen:
EP-A1- 2 312 908      WO-A1-2016/046676
JP-A- H07 307 196      JP-A- 2003 234 168

**Beschreibung**

Die Erfindung betrifft eine Induktionsvorrichtung nach dem Oberbegriff des Anspruchs 1. Aus dem Stand der Technik ist bereits eine Induktionsvorrichtung bekannt mit einer Vielzahl an matrixartig angeordneten Induktionseinheiten und mit einer Sensoreinheit zu einer Detektion einer Sensorkenngröße, welche als eine Temperaturkenngröße zumindest einer Einheit, und zwar insbesondere zumindest einer Aufstellplatte, ausgebildet ist. Die Sensoreinheit weist pro Induktionseinheit ein Temperatursensorelement auf, welches an der Induktionseinheit angeordnet und als Thermistor oder RTD (resistance temperature detector) ausgebildet ist.

WO 2016/046676 A1 (BSH HAUSGERÄTE GMBH [DE]) 31. März 2016 (2016-03-31) beschreibt eine Hausgerätevorrichtung, insbesondere einer Kochfeldvorrichtung, mit zumindest einem Substrat und zumindest einem an dem zumindest einen Substrat angeordneten Sensorelement.

Die Aufgabe der Erfindung besteht insbesondere darin, eine gattungsgemäße Vorrichtung mit verbesserten Eigenschaften hinsichtlich einer Detektion bestimmter Kenngrößen bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einer Induktionsvorrichtung, insbesondere von einer Induktionskochfeldvorrichtung, mit zumindest einer Induktionseinheit, insbesondere mit zumindest einer Induktionsheizeinheit, mit zumindest einer Sensoreinheit, welche zu einer Detektion zumindest einer Sensorkenngröße vorgesehen ist, und mit zumindest einer Steuereinheit, welche zu einer Auswertung der Sensorkenngröße vorgesehen ist.

Es wird vorgeschlagen, dass die Sensoreinheit in einer Einbaulage oberhalb der Induktionseinheit angeordnet ist und eine Vielzahl an verteilt, insbesondere matrixartig angeordneten Anwesenheitssensorelementen aufweist, die zu einer Detektion zumindest einer als Anwesenheitskenngröße zumindest eines Gegenstands, insbesondere zumindest eines aufgestellten Gargeschirrs, ausgebildeten Sensorkenngröße vorgesehen sind, und/oder eine Vielzahl an verteilt, insbesondere matrixartig angeordneten Aktivitätssensorelementen aufweist, die zu einer Detektion zumindest einer als Aktivitätskenngröße der Induktionseinheit ausgebildeten Sensorkenngröße vorgesehen sind, und/oder eine Vielzahl an verteilt, insbesondere matrixartig angeordneten Temperatursensorelementen aufweist, die zu einer Detektion zumindest einer als Temperaturkenngröße zumindest einer Einheit ausgebildeten Sensorkenngröße vorgesehen sind.

Durch die erfindungsgemäße Ausgestaltung kann insbesondere eine vorteilhafte Detektion bestimmter Kenngrößen erreicht werden. Durch Anordnung der Sensoreinheit oberhalb der Induktionseinheit kann insbesondere eine kompakte Ausgestaltung erzielt werden. Insbesondere kann eine präzise Detektion ermöglicht werden, und zwar insbesondere aufgrund einer räumlichen Nähe der Sensoreinheit zu der Induktionseinheit und/oder zu einer Aufstellplatte und/oder zu einem Gargeschirr. Es kann, insbesondere aufgrund eines modularen und/oder unabhängigen Charakters der Sensoreinheit relativ zu der Induktionseinheit, insbesondere eine Unabhängigkeit der Sensoreinheit und der Induktionseinheit erreicht werden, wodurch insbesondere ein Einfluss einer Änderung der Sensoreinheit und/oder der Induktionseinheit auf die Induktionseinheit und/oder die Sensoreinheit vermieden werden kann.

Mittels der Anwesenheitssensorelemente kann insbesondere eine präzise Detektion von aufgestelltem Gargeschirr und/oder von dem Gegenstand ermöglicht werden, und zwar insbesondere bei viel geringerer insbesondere ungewollter Energieübertragung an das zu detektierende Objekt als im Vergleich zu Sensorelementen, welche von der Induktionseinheit gebildet sind. Aufgrund der Vielzahl an Anwesenheitssensorelementen kann insbesondere ein hohes Auflösungsvermögen erzielt werden, wodurch insbesondere selbst kleine Gegenstände und/oder Gargeschirre problemlos detektiert werden können.

Durch die Aktivitätssensorelemente kann insbesondere eine genaue Detektion einer Aktivität der Induktionseinheit ermöglicht werden, wodurch insbesondere eine fehlerhafte Aktivierung einer Induktionseinheit vermieden und/oder ein hoher Sicherheitsstandard bereitgestellt werden kann. Insbesondere kann, insbesondere durch ausschließliche Aktivierung benötigter Induktionseinheiten, eine umweltschonende und/oder sparsame Ausgestaltung erzielt werden, wodurch insbesondere ein hoher Bedienkomfort erreicht werden kann. Insbesondere kann auf einen zusätzlichen Schaltkreis zu einer Detektion einer elektrischen Spannung und/oder eines elektrischen Stroms der Induktionseinheit verzichtet werden, wodurch insbesondere geringe Kosten erzielt werden können.

Mittels der Temperatursensorelemente kann insbesondere eine präzise Detektion einer Temperatur der Einheit ermöglicht werden, wodurch insbesondere optimale Garergebnisse erzielt werden können. Es kann insbesondere eine Überhitzung einer Einheit, welche insbesondere die Induktionseinheit und/oder die Aufstellplatte sein könnte, vermieden werden, wodurch insbesondere eine langlebige Ausgestaltung erzielt werden kann. Insbesondere kann ein Anbrennen und/oder ein Verkochen eines Garguts vermieden werden, wodurch insbesondere ein hoher Bedienkomfort erzielt werden kann.

Unter einer "Induktionsvorrichtung", insbesondere unter einer "Induktionskochfeldvorrichtung", soll insbesondere zumindest ein Teil, insbesondere eine Unterbaugruppe, eines Induktionsgeräts, insbesondere eines Induktionskochfelds, verstanden werden. Vorzugsweise ist die Induktionsvorrichtung zu einer induktiven Energieübertragung an zumindest ein Objekt vorgesehen. Das Objekt könnte beispielsweise ein selbstfahrendes Arbeitsgerät und/oder eine Handwerkzeugmaschine und/oder eine Jalousie und/oder eine Fernbedienung sein. Vorzugsweise ist das Objekt ein Gargeschirr. Das Objekt kann insbesondere identisch sein zu dem Gegenstand, welcher insbesondere zu einer Detektion durch die Vielzahl an Anwesenheitssensorelementen vorgesehen ist, und zwar insbesondere im Fall, dass der Gegenstand zu einer induktiven Energieübertragung vorgesehen ist.

Die, insbesondere als Induktionskochfeldvorrichtung ausgebildete Induktionsvorrichtung könnte beispielsweise zumindest eine, insbesondere als Kochfeldplatte ausgebildete, Aufstellplatte aufweisen, welche insbesondere zu einem Aufstellen von Gargeschirr, insbesondere zum Zweck einer Beheizung des Gargeschirrs, vorgesehen sein könnte und insbesondere gemeinsam mit zumindest einer Gehäuseeinheit der Induktionsvorrichtung zumindest ein Außengehäuse, insbesondere zumindest ein Kochfeldaußengehäuse insbesondere zumindest eines die Induktionsvorrichtung aufweisenden Induktionskochfelds definieren und/oder ausbilden könnte. Insbesondere könnte die Induktionsvorrichtung, welche insbesondere die, insbesondere als Kochfeldplatte ausgebildete, Aufstellplatte aufweist, zu einer Auslieferung und/oder zu einem Verkauf vorgesehen sein, und zwar insbesondere gemeinsam mit der, insbesondere als Kochfeldplatte ausgebildeten, Aufstellplatte.

Alternativ könnte die, insbesondere als Induktionskochfeldvorrichtung ausgebildete Induktionsvorrichtung beispielsweise frei von einer Aufstellplatte sein und insbesondere zu einer Anordnung unterhalb einer, insbesondere als Arbeitsplatte und vorteilhaft als Küchenarbeitsplatte ausgebildeten Aufstellplatte vorgesehen sein. Insbesondere könnte die Induktionsvorrichtung, welche insbesondere frei von einer, insbesondere als Arbeitsplatte ausgebildeten, Aufstellplatte sein könnte, zu einer Auslieferung und/oder zu einem Verkauf separat von zumindest einer, insbesondere als Arbeitsplatte ausgebildeten, Aufstellplatte vorgesehen sein. Die, insbesondere als Arbeitsplatte und vorteilhaft als Küchenarbeitsplatte ausgebildete Aufstellplatte könnte beispielsweise Teil zumindest eines Kochsystems sein, welches insbesondere die Induktionsvorrichtung und insbesondere die, insbesondere als Arbeitsplatte und vorteilhaft als Küchenarbeitsplatte ausgebildete Aufstellplatte aufweisen könnte.

Insbesondere weist die Induktionsvorrichtung zumindest zwei, vorteilhaft zumindest drei, besonders vorteilhaft zumindest vier, vorzugsweise zumindest acht und besonders bevorzugt eine Vielzahl an Induktionseinheiten auf. Die Induktionseinheiten sind insbesondere verteilt und vorteilhaft matrixartig angeordnet. Unter einer "Induktionseinheit" soll in diesem Zusammenhang insbesondere eine Einheit verstanden werden, welche in wenigstens einem Betriebszustand Energie, insbesondere in Form eines elektromagnetischen Wechselfelds, vorteilhaft zum Zweck einer induktiven Energieübertragung an zumindest ein Objekt, bereitstellt, und zwar insbesondere in Abhängigkeit einer Ansteuerung der Induktionseinheit durch die Steuereinheit. Vorteilhaft ist die Induktionseinheit als eine Induktionsheizeinheit ausgebildet und führt in wenigstens einem Betriebszustand insbesondere zumindest einem als Gargeschirr ausgebildeten Objekt Energie zum Zweck einer Beheizung des Gargeschirrs zu, und zwar insbesondere in Abhängigkeit einer Ansteuerung der Induktionseinheit durch die Steuereinheit.

Insbesondere ist die Steuereinheit zu einer Steuerung und/oder Regelung zumindest der Induktionseinheit vorgesehen. Unter einer "Steuereinheit" soll insbesondere eine elektronische Einheit verstanden werden, welche in wenigstens einem Betriebszustand zumindest eine Gerätefunktion und/oder zumindest eine Gerätehauptfunktion, insbesondere eine induktive Übertragung von Energie an zumindest ein Objekt, vorteilhaft eine Beheizung zumindest eines Gargeschirrs, steuert und/oder regelt. Die Steuereinheit weist insbesondere zumindest eine Recheneinheit und insbesondere zusätzlich zu der Recheneinheit zumindest eine Speichereinheit auf, in welcher insbesondere zumindest ein Steuerund/oder Regelprogramm gespeichert ist, das insbesondere zu einer Ausführung durch die Recheneinheit vorgesehen ist. Insbesondere ist die Steuereinheit dazu vorgesehen, zumindest eine von der Steuereinheit verschiedene, insbesondere elektrische und/oder elektronische Kochfeldeinheit zu steuern und/oder zu regeln. Unter einer "Kochfeldeinheit" soll insbesondere zumindest ein Teil, insbesondere eine Unterbaugruppe, eines Kochfelds, insbesondere eines Induktionskochfelds, verstanden werden. Zumindest eine Kochfeldeinheit könnte beispielsweise zumindest eine Bedienerschnittstelle und/oder die Induktionseinheit und/oder zumindest ein Wechselrichter und/oder zumindest eine Abzugseinheit und/oder zumindest eine Kochfeldelektronik und/oder die Sensoreinheit sein.

Unter einer "Sensoreinheit" soll insbesondere eine Einheit verstanden werden, welche zumindest ein als Detektor ausgebildetes Sensorelement zu einer Detektion wenigstens einer Sensorkenngröße aufweist und welche insbesondere dazu vorgesehen ist, einen die Sensorkenngröße kennzeichnenden Wert auszugeben, wobei es sich bei der Sensorkenngröße vorteilhaft um eine physikalische und/oder chemische Größe handelt. Beispielsweise könnte die Sensoreinheit die Sensorkenngröße in wenigstens einem Betriebszustand aktiv detektieren, wie insbesondere durch Erzeugen und Aussenden eines Messsignals, insbesondere eines elektrischen und/oder optischen Messsignals. Alternativ oder zusätzlich könnte die Sensoreinheit die Sensorkenngröße in wenigstens einem Betriebszustand passiv detektieren, wie insbesondere durch eine Erfassung von zumindest einer Eigenschaftsänderung zumindest eines Sensorbauteils und/oder des Sensorelements. Insbesondere weist zumindest ein Großteil der und vorteilhaft jedes der Sensorelemente der Vielzahl an Sensorelementen zumindest einen Detektor zu einer Detektion zumindest einer Sensorkenngröße auf.

Unter "zumindest ein Großteil" einer Anzahl an Elementen soll insbesondere ein Anteil von mindestens 70 %, insbesondere von mindestens 80 %, vorteilhaft von mindestens 90 % und vorzugsweise von mindestens 95 % der Anzahl an Elementen verstanden werden. Unter einer "Vielzahl" an Objekten, insbesondere an Sensorelementen und/oder an Induktionseinheiten soll insbesondere eine Anzahl von zumindest sechs, insbesondere von zumindest neun, vorteilhaft von zumindest zwölf, besonders vorteilhaft von zumindest sechszehn, vorzugsweise von zumindest fünfundzwanzig, besonders vorzugsweise von zumindest sechsunddreißig, bevorzugt von zumindest neunundvierzig und besonders bevorzugt von zumindest vierundsechzig Objekten verstanden werden.

Unter der Wendung, dass die Sensoreinheit in einer Einbaulage "oberhalb" der Induktionseinheit angeordnet ist, soll insbesondere verstanden werden, dass die Sensoreinheit in einer Einbaulage in zumindest einer Vertikalrichtung einen größeren Abstand zu einem Untergrund aufweist als die Induktionseinheit und/oder dass die Sensoreinheit in einer Einbaulage in zumindest einer Vertikalrichtung einen kleineren Abstand zu zumindest einem aufgestellten Gargeschirr und/oder zu der Aufstellplatte aufweist als die Induktionseinheit. Die Vertikalrichtung ist in einer Einbaulage insbesondere wenigstens im Wesentlichen parallel zu einer Schwerkraftrichtung und/oder wenigstens im Wesentlichen senkrecht zu einer Haupterstreckungsebene der Aufstellplatte ausgerichtet. Der Untergrund könnte beispielsweise ein Boden und/oder ein Fußboden und/oder eine Aufstellfläche sein.

Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung von insbesondere maximal 8 °, vorteilhaft von maximal 5 ° und besonders vorteilhaft von maximal 2 ° aufweist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90 ° einschließen und der Winkel eine maximale Abweichung von insbesondere maximal 8 °, vorteilhaft maximal 5 ° und besonders vorteilhaft maximal 2 ° aufweist. Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft.

Beispielsweise könnte die Sensoreinheit in einer Einbaulage insbesondere auf einer der Induktionseinheit abgewandten und/oder dem Gargeschirr zugewandten Seite der Aufstellplatte angeordnet sein. Vorteilhaft ist die Sensoreinheit in einer Einbaulage auf einer der Induktionseinheit zugewandten und/oder dem Gargeschirr abgewandten Seite der Aufstellplatte angeordnet. Die Sensoreinheit ist in einer Einbaulage insbesondere in der Vertikalrichtung betrachtet zwischen der Aufstellplatte und der Induktionseinheit angeordnet. Beispielsweise könnte die Sensoreinheit in einer Einbaulage in einem Nahbereich oberhalb der Induktionseinheit angeordnet und insbesondere auf die Induktionseinheit aufgelegt sein. Beispielsweise könnte die Sensoreinheit zumindest ein Substrat aufweisen, an welchem in wenigstens einem montierten Zustand die Vielzahl an Sensorelementen der Sensoreinheit angeordnet sein könnten. Das Substrat könnte beispielsweise plattenartig sein und insbesondere eine Dicke aufweisen, welche viel kleiner sein könnte als eine Längenerstreckung und/oder eine Quererstreckung des Substrats. Beispielsweise könnte das Substrat wenigstens zu einem Großteil aus zumindest einem Kunststoff, wie beispielsweise aus Polyimid, ausgebildet sein. Das Substrat könnte beispielsweise eine Leiterplatte und/oder eine Folie sein. Insbesondere könnte zumindest eines der, insbesondere zumindest ein Großteil der und vorteilhaft jedes der Sensorelemente, insbesondere der Aktivitätssensorelemente und/oder der Anwesenheitssensorelemente und/oder der Temperatursensorelemente, als Leiterbahn an dem Substrat angeordnet sein. Zumindest eines der, insbesondere zumindest ein Großteil der und vorteilhaft jedes der Sensorelemente, insbesondere der Aktivitätssensorelemente und/oder der Anwesenheitssensorelemente und/oder der Temperatursensorelemente, könnte insbesondere wenigstens zu einem Großteil aus Kupfer und/oder Aluminium und/oder Nickel bestehen.

Alternativ oder zusätzlich könnte die Sensoreinheit in einer Einbaulage insbesondere in einem Nahbereich der Aufstellplatte und vorteilhaft an der Aufstellplatte angeordnet sein. Beispielsweise könnte die Sensoreinheit in einer Einbaulage insbesondere an der Aufstellplatte, insbesondere mittels zumindest einer kraftschlüssigen und/oder formschlüssigen und/oder vorteilhaft stoffschlüssigen Verbindung, befestigt und beispielsweise als zumindest eine Beschichtung ausgeführt sein. Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden.

Unter einer Vielzahl an "verteilt" angeordneten Objekten, insbesondere an Sensorelementen und/oder an Induktionseinheiten, sollen insbesondere verstanden werden, dass bei einer Betrachtung einer senkrechten Projektion der Objekte in eine Ebene zumindest ein erstes Objekt der Objekte zu zumindest einem zweiten Objekt der Objekte einen Abstand von maximal 300 %, insbesondere von maximal 250 %, vorteilhaft von maximal 200 %, besonders vorteilhaft von maximal 175 %, vorzugsweise von maximal 150 % und besonders bevorzugt von maximal 125 % einer maximalen Erstreckung eines größeren der Objekte in der Ebene aufweist und dass das erste Objekt zu zumindest einem dritten Objekt der Objekte einen Abstand von mindestens 300 %, insbesondere von mindestens 350 %, vorteilhaft von mindestens 400 %, besonders vorteilhaft von mindestens 450 %, vorzugsweise von mindestens 500 % und besonders bevorzugt von mindestens 600 % einer maximalen Erstreckung eines größeren der Objekte in der Ebene aufweist. Insbesondere sind bei einer Betrachtung einer senkrechten Projektion der Objekte in eine Ebene auf einer Fläche von einer 130-fachen Flächenerstreckung eines der Objekte in der Ebene zumindest 5, insbesondere zumindest 10, vorteilhaft zumindest 20, besonders vorteilhaft zumindest 30, vorzugsweise zumindest 50 und besonders bevorzugt zumindest 60 Objekte angeordnet. Unter einem "Abstand" zwischen zumindest zwei Objekten soll hier und im Folgenden insbesondere eine Erstreckung von einem geometrischen Mittelpunkt und/oder Schwerpunkt eines der Objekte zu einem geometrischen Mittelpunkt und/oder Schwerpunkt eines weiteren der Objekte verstanden werden.

Unter einer Vielzahl an "matrixartig" angeordneten Objekten, insbesondere an Sensorelementen und/oder an Induktionseinheiten, soll insbesondere eine Vielzahl an Objekten verstanden werden, welche regelmäßig, vorteilhaft in Form von Reihen und Spalten und vorzugsweise in Form einer Matrix mit Reihen und Spalten, angeordnet sind. Insbesondere definieren die Reihen und Spalten der Matrix zumindest zwei Achsen der Matrix. Die Achsen der Matrix könnten beispielsweise schräg relativ zueinander ausgerichtet sein. Vorteilhaft sind die Achsen der Matrix wenigstens im Wesentlichen senkrecht zueinander ausgerichtet. Insbesondere könnten Abstände zwischen zueinander, insbesondere direkt benachbarten Reihen der Matrix und/oder zwischen zueinander, insbesondere direkt benachbarten Spalten der Matrix voneinander verschieden sein. Vorteilhaft sind Abstände zwischen zueinander, insbesondere direkt benachbarten Reihen der Matrix und/oder zwischen zueinander, insbesondere direkt benachbarten Spalten der Matrix wenigstens im Wesentlichen und vorteilhaft unter Berücksichtigung von Fertigungstoleranzen genau gleich. Die Matrix könnte beispielsweise eine mathematische Matrix und insbesondere mittels Matrizen beschreibbar sein. Beispielsweise könnten eine Anzahl an Spalten der Matrix und eine Anzahl an Zeilen der Matrix voneinander verschieden sein. Vorteilhaft ist eine Anzahl an Spalten der Matrix und eine Anzahl an Zeilen der Matrix wenigstens im Wesentlichen und vorteilhaft genau gleich. Bei der Matrix an Objekten könnte es sich beispielsweise um eine 3x3, insbesondere um eine 4x4, vorteilhaft um eine 5x5, besonders vorteilhaft um eine 6x6, vorzugsweise um eine 7x7 und besonders bevorzugt um eine 8x8 Matrix an Objekten handeln. Besonders vorteilhaft kann es sich bei der Matrix um eine XxY-Matrix handeln, bei welcher zumindest eine der Variablen X und Y einen Wert von mindestens drei, insbesondere von mindestens vier, vorteilhaft von mindestens fünf, besonders vorteilhaft von mindestens acht, vorzugsweise von mindestens zwölf und besonders bevorzugt von mindestens fünfzehn annimmt.

Unter einem "Anwesenheitssensorelement" soll insbesondere ein Sensorelement verstanden werden, welches in wenigstens einem Betriebszustand zumindest eine Anwesenheit und/oder Abwesenheit zumindest eines Gegenstands detektiert. Insbesondere kennzeichnet die Anwesenheitskenngröße des Gegenstands zumindest eine Anwesenheit und/oder Abwesenheit des Gegenstands. Das Anwesenheitssensorelement könnte, insbesondere zusätzlich zu einer Anwesenheit und/oder Abwesenheit zumindest eines Gegenstands, beispielsweise zu einer Detektion zumindest einer Form und/oder zumindest einer Gestalt und/oder zumindest einer Größe und/oder zumindest einer Induktionstauglichkeit und/oder zumindest eines Materials des Gegenstands vorgesehen sein. Zumindest ein Gegenstand könnte beispielsweise ein Besteck und/oder ein Küchengeschirr und/oder eine Münze sein. Vorteilhaft ist zumindest ein Gegenstand ein Gargeschirr, welches insbesondere zu einer Beheizung oberhalb der Induktionseinheit und vorteilhaft oberhalb der Aufstellplatte angeordnet, insbesondere aufgestellt, ist.

Unter einem "Aktivitätssensorelement" soll insbesondere ein Sensorelement verstanden werden, welches in wenigstens einem Betriebszustand zumindest einen Aktivitätszustand der Induktionseinheit detektiert. Insbesondere kennzeichnet die Aktivitätskenngröße der Induktionseinheit zumindest einen Aktivitätszustand der Induktionseinheit. Beispielsweise könnte das Aktivitätssensorelement in Form der Aktivitätskenngröße detektieren, ob sich die Induktionseinheit in einem aktivierten Zustand oder in einem deaktivierten Zustand befindet. Alternativ oder zusätzlich könnte das Aktivitätssensorelement in Form der Aktivitätskenngröße beispielsweise einen Grad einer Aktivität der Induktionseinheit detektieren, welcher insbesondere angeben könnte, welche Heizleistung die Induktionseinheit in dem Betriebszustand, insbesondere zu einer Beheizung des Gargeschirrs, bereitstellt. Insbesondere detektiert das Aktivitätssensorelement die Aktivitätskenngröße der Induktionseinheit durch Detektion einer in dem Aktivitätssensorelement induzierten Spannung, welche insbesondere durch ein von der Induktionseinheit bereitgestelltes elektromagnetisches Wechselfeld induziert ist.

Unter einem "Temperatursensorelement" soll insbesondere ein Sensorelement verstanden werden, welches in wenigstens einem Betriebszustand zumindest eine Temperatur zumindest einer Einheit detektiert. Insbesondere kennzeichnet die Temperaturkenngröße der Einheit zumindest eine Temperatur der Einheit. Zumindest eine Einheit könnte beispielsweise die Induktionseinheit und/oder die Aufstellplatte und/oder das Gargeschirr und/oder zumindest ein in dem Gargeschirr befindliches Gargut sein.

Beispielsweise könnte die Steuereinheit dazu vorgesehen sein, eine Anwesenheit und/oder Abwesenheit des Gegenstands insbesondere in Abhängigkeit von der Anwesenheitskenngröße und vorteilhaft zusätzlich in Abhängigkeit von der Temperaturkenngröße zu ermitteln, und zwar insbesondere im Fall zumindest eines kleinen Gegenstands. Hierdurch könnte insbesondere eine besonders genaue Detektion einer Anwesenheit und/oder Abwesenheit des Gegenstands ermöglicht werden.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass sich die Sensoreinheit bei einer Betrachtung einer senkrechten Projektion einer Aufstellfläche, welche zumindest durch die Induktionseinheit definiert ist, auf eine Ebene über einen Flächenanteil von mindestens 50 %, insbesondere von mindestens 60 %, vorteilhaft von mindestens 70 %, besonders vorteilhaft von mindestens 80 %, vorzugsweise von mindestens 90 % und besonders bevorzugt von mindestens 95 % einer von der Aufstellfläche in der Ebene aufgespannten Fläche erstreckt. Besonders vorteilhaft erstreckt sich die Sensoreinheit bei einer Betrachtung einer senkrechten Projektion einer Aufstellfläche auf eine Ebene über eine gesamte von der Aufstellfläche in der Ebene aufgespannte Flächenerstreckung. Unter einer "Aufstellfläche" soll insbesondere ein Oberflächenanteil der Aufstellplatte verstanden werden, welcher zu einem Aufstellen des Gegenstands, insbesondere zum Zweck einer Energieübertragung an den Gegenstand, vorgesehen ist. Vorteilhaft ist die Aufstellfläche als eine Kochfläche ausgebildet und insbesondere zu einem Aufstellen von Gargeschirr, insbesondere zum Zweck einer Beheizung des Gargeschirrs, vorgesehen. Insbesondere sind in einer Einbaulage zumindest ein Großteil der und vorteilhaft alle der Induktionseinheiten unterhalb der Aufstellfläche angeordnet. Die Aufstellfläche ist insbesondere durch eine Anordnung zumindest eines Großteils der und vorteilhaft aller der Induktionseinheiten definiert. Bei einer Betrachtung einer senkrechten Projektion der Aufstellfläche und der Induktionseinheiten auf eine Ebene sind eine von der Aufstellfläche in der Ebene aufgespannte Fläche und eine von den Induktionseinheiten in der Ebene aufgespannte Fläche zu einem Flächenanteil von mindestens 90 %, insbesondere von mindestens 92 %, vorteilhaft von mindestens 95 %, besonders vorteilhaft von mindestens 97 %, vorzugsweise von mindestens 99 % und besonders bevorzugt vollständig deckungsgleich. Dadurch kann insbesondere eine Detektion der Sensorkenngröße über einen Großteil der Aufstellfläche ermöglicht werden, wodurch insbesondere ein hoher Bedienkomfort bereitgestellt werden kann.

Beispielsweise könnte zumindest eines der, insbesondere zumindest ein Großteil der und vorteilhaft jedes der Aktivitätssensorelemente und zumindest eines der, insbesondere zumindest ein Großteil der und vorteilhaft jedes der Anwesenheitssensorelemente voneinander verschieden ausgebildet sein. Vorzugsweise sind zumindest eines der, insbesondere zumindest ein Großteil der und vorteilhaft jedes der Aktivitätssensorelemente und zumindest eines der, insbesondere zumindest ein Großteil der und vorteilhaft jedes der Anwesenheitssensorelemente miteinander einstückig und insbesondere identisch ausgebildet, und zwar insbesondere als ein und dasselbe Element. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann insbesondere eine geringe Bauteilevielfalt und/oder eine geringe Lagerhaltung erzielt werden. Insbesondere können geringe Kosten ermöglicht werden, da insbesondere ein Sensorelement zu einer Detektion von zumindest zwei verschiedenen Kenngrößen herangezogen werden kann, und zwar insbesondere unter Vermeidung zusätzlicher Kosten für Hardware.

Ferner wird vorgeschlagen, dass zumindest eines der, insbesondere zumindest ein Großteil der und vorteilhaft jedes der Aktivitätssensorelemente und/oder der Anwesenheitssensorelemente jeweils zumindest eine Induktionsspule aufweist. Zumindest eines der, insbesondere zumindest ein Großteil der und vorteilhaft jedes der Aktivitätssensorelemente und/oder der Anwesenheitssensorelemente ist in wenigstens einem montierten Zustand insbesondere in einem Schwingkreis angeordnet, welcher insbesondere Teil der Induktionsvorrichtung ist. Insbesondere weist die Induktionsvorrichtung, insbesondere pro Aktivitätssensorelement und/oder pro Anwesenheitssensorelement, zumindest einen Resonanzkondensator und insbesondere zumindest einen elektrischen Widerstand, insbesondere einen elektrischen Querwiederstand, auf, welche insbesondere gemeinsam mit der Induktionsspule in Reihe und vorteilhaft in dem Schwingkreis angeordnet sind. Insbesondere im Fall der Anwesenheitssensorelemente detektiert die Sensoreinheit die als Anwesenheitskenngröße ausgebildete Sensorkenngröße insbesondere durch Änderung einer Resonanzfrequenz der Induktionsspule und/oder durch Änderung einer Resonanzfrequenz des Schwingkreises und/oder durch Änderung einer Induktivität der Induktionsspule. Dadurch kann insbesondere auf konstruktiv einfache Art und Weise eine optimale Detektion der Sensorkenngröße ermöglicht werden, wodurch insbesondere geringe Kosten und/oder eine hohe Detektionsqualität erzielt werden kann.

Beispielsweise könnten zumindest eines der, insbesondere zumindest ein Großteil der und vorteilhaft jedes der Aktivitätssensorelemente und/oder der Anwesenheitssensorelemente und zumindest eines der, insbesondere zumindest ein Großteil der und vorteilhaft jedes der Temperatursensorelemente miteinander einstückig und insbesondere identisch ausgebildet sein. Ein jeweiliges Temperatursensorelement könnte beispielsweise als Widerstandsdraht ausgebildet sein, welcher insbesondere zu einer Spule gewickelt und insbesondere die Induktionsspule des jeweiligen Aktivitätssensorelements und/oder des jeweiligen Anwesenheitssensorelements definieren könnte. Vorzugsweise sind zumindest eines der, insbesondere zumindest ein Großteil der und vorteilhaft jedes der Aktivitätssensorelemente und/oder der Anwesenheitssensorelemente und zumindest eines der, insbesondere zumindest ein Großteil der und vorteilhaft jedes der Temperatursensorelemente voneinander verschieden ausgebildet. Dadurch kann insbesondere eine hohe Flexibilität, insbesondere in Bezug auf eine Anordnung der Temperatursensorelemente relativ zu den Aktivitätssensorelementen und/oder zu den Anwesenheitssensorelementen ermöglicht werden. Es kann insbesondere eine einfache und/oder schnelle und/oder preisgünstige Herstellung erzielt werden.

Ferner wird vorgeschlagen, dass zumindest eines der, insbesondere zumindest ein Großteil der und vorteilhaft jedes der Aktivitätssensorelemente und/oder der Anwesenheitssensorelemente und zumindest eines der, insbesondere zumindest ein Großteil der und vorteilhaft jedes der Temperatursensorelemente an voneinander verschiedenen Lagen zumindest eines Substrats der Sensoreinheit angeordnet sind. Insbesondere ist zumindest eines der, insbesondere zumindest ein Großteil der und vorteilhaft jedes der Aktivitätssensorelemente und/oder Anwesenheitssensorelemente an einer ersten Lage des Substrats und zumindest eines der, insbesondere zumindest ein Großteil der und vorteilhaft jedes der Temperatursensorelemente an zumindest einer zweiten Lage des Substrats angeordnet, welche der ersten Lage des Substrats bezüglich einer Haupterstreckungsebene des Substrats gegenüberliegt. Dadurch kann insbesondere eine kompakte Ausgestaltung und/oder eine geringe Bauteilevielfalt und/oder eine geringe Lagerhaltung erzielt werden.

Zudem wird vorgeschlagen, dass zumindest eines der, insbesondere zumindest ein Großteil der und vorteilhaft jedes der Aktivitätssensorelemente und/oder der Anwesenheitssensorelemente und zumindest eines der, insbesondere zumindest ein Großteil der und vorteilhaft jedes der Temperatursensorelemente elektrisch in Reihe geschaltet sind. Insbesondere sind jeweils eines der Aktivitätssensorelemente und/oder der Anwesenheitssensorelemente und jeweils eines der Temperatursensorelemente elektrisch in Reihe geschaltet. Dadurch kann insbesondere mittels einer einfachen elektrischen Schaltung eine optimale Detektion erzielt werden, wodurch insbesondere eine schnelle und/oder unkomplizierte Montage erreicht werden kann.

Weiterhin wird vorgeschlagen, dass zumindest eines der, insbesondere zumindest ein Großteil der und vorteilhaft jedes der Aktivitätssensorelemente und/oder der Anwesenheitssensorelemente und zumindest eines der, insbesondere zumindest ein Großteil der und vorteilhaft jedes der Temperatursensorelemente miteinander einstückig ausgebildet sind. Insbesondere sind jeweils eines der Aktivitätssensorelemente und/oder der Anwesenheitssensorelemente und zumindest eines der Temperatursensorelemente miteinander einstückig ausgebildet. Zumindest eines der, insbesondere zumindest ein Großteil der und vorteilhaft jedes der Aktivitätssensorelemente und/oder der Anwesenheitssensorelemente weist insbesondere zumindest ein elektrisches Leitungselement auf, welches insbesondere zu der Induktionsspule gewickelt ist und welches insbesondere als ein Thermistor oder RTD ausgebildet ist und das Temperatursensorelement ausbildet. Dadurch kann insbesondere eine geringe Bauteilevielfalt und/oder eine geringe Lagerhaltung erzielt werden.

Ferner wird vorgeschlagen, dass zumindest eines der, insbesondere zumindest ein Großteil der und vorteilhaft jedes der Aktivitätssensorelemente und/oder der Anwesenheitssensorelemente und zumindest eines der, insbesondere zumindest ein Großteil der und vorteilhaft jedes der Temperatursensorelemente bei einer Betrachtung einer senkrechten Projektion der Sensoreinheit auf eine Ebene, welche insbesondere parallel zu einer Haupterstreckungsebene der Aufstellplatte und/oder zu einer Haupterstreckungsebene der Induktionseinheit ausgerichtet ist, wenigstens abschnittsweise, insbesondere wenigstens zu einem Großteil und vorteilhaft vollständig überlappend angeordnet sind. Unter der Wendung, dass zumindest zwei Objekte, insbesondere zumindest eines der Aktivitätssensorelemente und/oder der Anwesenheitssensorelemente und zumindest eines der Temperatursensorelemente, bei einer Betrachtung einer senkrechten Projektion der Sensoreinheit auf eine Ebene "wenigstens abschnittsweise überlappend angeordnet sind, soll insbesondere verstanden werden, dass bei einer Betrachtung einer senkrechten Projektion der Sensoreinheit auf eine Ebene die Objekte zu einem Flächenanteil von mindestens 30 %, insbesondere von mindestens 50 %, vorteilhaft von mindestens 70 %, besonders voreilhaft von mindestens 80 %, vorzugsweise von mindestens 90 % und besonders bevorzugt von mindestens 95 % einer Fläche eines kleineren der Objekte in der Ebene überlappend angeordnet sind. Dadurch kann insbesondere das gleiche Auflösungsvermögen bei einer Detektion der Anwesenheitskenngröße und/oder der Aktivitätskenngröße und der Temperaturkenngröße bereitgestellt werden, wodurch insbesondere ein hoher Bedienkomfort erzielt werden kann.

Beispielsweise könnten zumindest ein Großteil der und vorteilhaft alle der Aktivitätssensorelemente und/oder der Anwesenheitssensorelemente und/oder der Temperatursensorelemente an verschiedenen Substraten angeordnet und die Substrate überlappend zueinander angeordnet sein. Vorzugsweise sind zumindest ein Großteil der und vorteilhaft alle der Aktivitätssensorelemente und/oder der Anwesenheitssensorelemente und/oder der Temperatursensorelemente auf dem gleichen Substrat angeordnet, wodurch insbesondere eine geringe Bauteilevielfalt und/oder eine geringe Lagerhaltung und/oder geringe Kosten für Hardware ermöglicht werden können.

Zudem wird vorgeschlagen, dass zumindest eines der, insbesondere zumindest ein Großteil der und vorteilhaft jedes der Temperatursensorelemente als Thermistor oder ein RTD ausgebildet ist. Der Thermistor ist insbesondere ein Widerstandsthermometer und könnte beispielsweise als Heißleiter und/oder Kaltleiter ausgebildet sein. Dadurch kann insbesondere eine präzise Detektion der Temperaturkenngröße erreicht werden, wodurch insbesondere optimale Garergebnisse und/oder ein hoher Bedienkomfort ermöglicht werden können.

Eine Anzahl an Aktivitätssensorelementen und/oder an Anwesenheitssensorelementen und eine Anzahl an Temperatursensorelementen könnte beispielsweise voneinander verschieden sein. Vorzugsweise sind eine Anzahl an Aktivitätssensorelementen und/oder an Anwesenheitssensorelementen und eine Anzahl an Temperatursensorelementen identisch. Insbesondere ist jeweils einem der Aktivitätssensorelementen und/oder der Anwesenheitssensorelementen insbesondere genau ein Temperatursensorelement zugeordnet. Eine Anzahl an Aktivitätssensorelementen und/oder an Anwesenheitssensorelementen und/oder an Temperatursensorelementen ist insbesondere größer und vorteilhaft wesentlich größer als eine Anzahl an Induktionseinheiten. Dadurch kann insbesondere ein hoher Bedienkomfort und/oder eine einfache Zuordnung einer detektierten Temperaturkenngröße zu einer detektierten Aktivitätskenngröße und/oder zu einer detektierten Anwesenheitskenngröße ermöglicht werden.

Ferner wird vorgeschlagen, dass zumindest eines der, insbesondere zumindest ein Großteil der und vorteilhaft jedes der Aktivitätssensorelemente und/oder der Anwesenheitssensorelemente und/oder der Temperatursensorelemente bei einer Betrachtung einer senkrechten Projektion der Sensoreinheit auf eine Ebene jeweils eine Flächenerstreckung von maximal 25 cm², insbesondere von maximal 20 cm², vorteilhaft von maximal 15 cm², besonders vorteilhaft von maximal 12 cm², vorzugsweise von maximal 10 cm² und besonders bevorzugt von maximal 9 cm² in der Ebene aufweist. Insbesondere könnte zumindest eines der, insbesondere zumindest ein Großteil der und vorteilhaft jedes der Sensorelemente, insbesondere der Aktivitätssensorelemente und/oder der Anwesenheitssensorelemente und/oder der Temperatursensorelemente, eine Größe aufweisen, welche insbesondere an einen zu detektierenden Gegenstand und/oder an ein zu detektierendes Objekt angepasst sein könnte. Es kann insbesondere ein umso größeres räumliches Auflösungsvermögen erreicht werden, desto kleiner eine Größe der Sensorelemente ist, wodurch insbesondere eine präzise Detektion von kleinen Gegenständen und/oder von Umrissen und/oder Gestalten von Gegenständen erzielt werden kann. Dadurch kann insbesondere ein hohes Auflösungsvermögen erreicht werden, wodurch insbesondere selbst kleine und/oder minimale zu detektierende Größen detektiert werden können. Beispielsweise im Fall der Anwesenheitssensorelemente kann insbesondere eine Form und/oder Gestalt von selbst sehr kleinen Gegenständen problemlos detektiert werden. Im Vergleich zu Sensorelementen, welche insbesondere von den Induktionseinheiten gebildet sind, ist insbesondere ein Bruchteil einer Energie an das zu detektieren Objekt zu übertragen, wodurch insbesondere eine ungewollte Erhitzung des zu detektierenden Objekts gering gehalten und/oder gänzlich ausgeschlossen werden kann. Beispielsweise im Fall der Temperatursensorelemente können insbesondere gefährliche Situationen durch das hohe Auflösungsvermögen vermieden oder zumindest reduziert werden, und zwar insbesondere im Fall eines automatischen Garvorgangs.

Besonders vorteilhafte Eigenschaften hinsichtlich einer Detektion einer Sensorkenngröße können insbesondere erreicht werden durch ein Induktionsgerät, insbesondere durch ein Induktionskochfeld, mit zumindest einer erfindungsgemäßen Induktionsvorrichtung.

Die Induktionsvorrichtung soll hierbei nicht auf die oben beschriebene Anwendung und Ausführungsform beschränkt sein. Insbesondere kann die Induktionsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 ein Induktionsgerät mit einer Induktionsvorrichtung in einer schematischen Draufsicht,

Fig. 2 einen Ausschnitt des Induktionsgeräts mit der Induktionsvorrichtung in einer schematischen Schnittdarstellung,

Fig. 3 einen Ausschnitt einer Sensoreinheit der Induktionsvorrichtung mit einer Vielzahl an Anwesenheitssensorelementen und an Aktivitätssensorelementen in einer schematischen Draufsicht,

Fig. 4 eines der Anwesenheitssensorelemente und eines der Aktivitätssensorelemente aus Figur 3 in einer vergrößerten schematischen Darstellung,

Fig. 5    einen Ausschnitt der Sensoreinheit mit einer Vielzahl an Temperatursensorelementen in einer schematischen Draufsicht, wobei auf eine Darstellung einer elektrischen Anbindung der Temperatursensorelemente verzichtet wurde,

Fig. 6    eines der Temperatursensorelemente der Vielzahl an Temperatursensorelementen in einer vergrößerten schematischen Darstellung,

Fig. 7    einen Ausschnitt der Sensoreinheit mit den Anwesenheitssensorelementen, den Aktivitätssensorelementen und den Temperatursensorelementen in einer schematischen Draufsicht, wobei ein Substrat der Sensoreinheit durchsichtig dargestellt wurde,

Fig. 8    einen vergrößerten Ausschnitt aus Figur 7 in einer schematischen Darstellung,

Fig. 9    einen Schwingkreis der Sensoreinheit in einer schematischen Darstellung,

Fig. 10    einen Treiberschaltkreis der Sensoreinheit in einer schematischen Darstellung,

Fig. 11    ein Diagramm, in welchem eine normierte Induktivität und eine normierte Frequenz jeweils über einer normierten Entfernung der Sensoreinheit zu einem Gegenstand aufgetragen sind, in einer schematischen Darstellung,

Fig. 12    ein Anwesenheitssensorelement, ein Aktivitätssensorelement und ein Temperatursensorelement einer Sensoreinheit einer alternativen Induktionsvorrichtung in einer schematischen Draufsicht und

Fig. 13    ein Anwesenheitssensorelement, ein Aktivitätssensorelement und ein Temperatursensorelement einer Sensoreinheit einer alternativen Induktionsvorrichtung in einer schematischen Draufsicht.

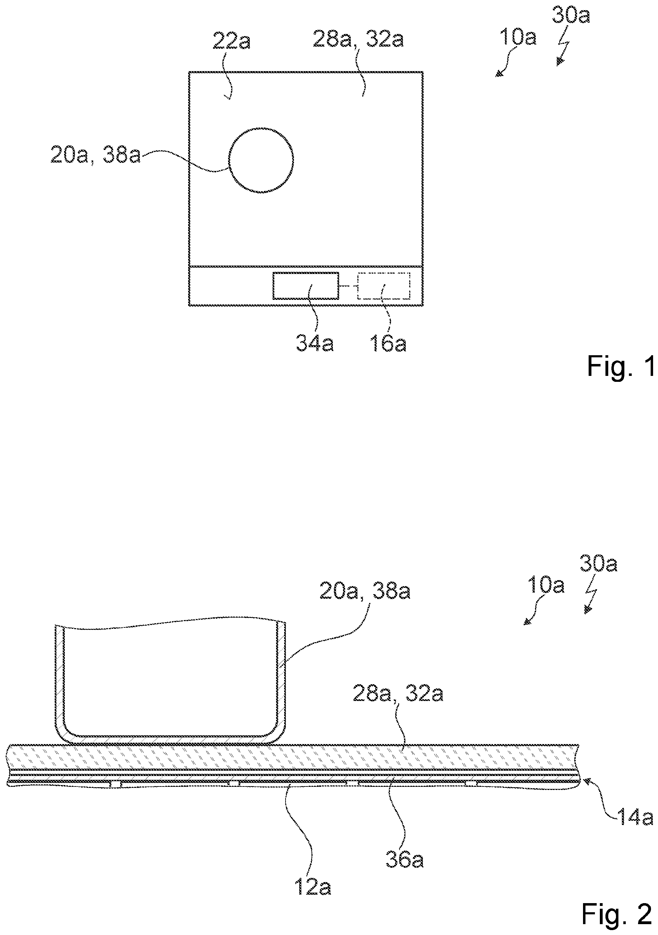

Figur 1 zeigt ein Induktionsgerät 30a, welches als ein Induktionskochfeld ausgebildet ist, mit einer Induktionsvorrichtung 10a, welche als eine Induktionskochfeldvorrichtung ausgebildet ist. In einem alternativen Ausführungsbeispiel könnte das Induktionsgerät 30a und/oder die Induktionsvorrichtung 10a beispielsweise zu einer induktiven Energieübertragung an ein von einem Gargeschirr 38a verschiedenes Objekt (nicht dargestellt) ausgebildet sein. Das Objekt könnte beispielsweise ein selbstfahrendes Arbeitsgerät und/oder eine Handwerkzeugmaschine und/oder eine Jalousie und/oder eine Fernbedienung sein.

Die Induktionsvorrichtung 10a weist eine Aufstellplatte 32a auf. Im vorliegenden Ausführungsbeispiel ist die Aufstellplatte 32a als eine Kochfeldplatte ausgebildet. In einem montierten Zustand bildet die Aufstellplatte 32a einen Teil eines Kochfeldaußengehäuses aus, und zwar insbesondere eines Kochfeldaußengehäuses insbesondere des Induktionsgeräts 30a. Die Aufstellplatte 32a ist zu einem Aufstellen von Gargeschirr 38a vorgesehen (vgl. Figur 2).

Die Induktionsvorrichtung 10a weist eine Vielzahl an Induktionseinheiten 12a zu einer Beheizung von Gargeschirr 38a auf (vgl. Figur 2). Von mehrfach vorhandenen Objekten ist in den Figuren jeweils lediglich eines mit einem Bezugszeichen versehen. Die Induktionseinheiten 12a definieren gemeinsam eine Aufstellfläche 22a. Bei einer senkrechten Projektion der Induktionseinheiten 12a und der Aufstellfläche 22a in eine Ebene sind im vorliegenden Ausführungsbeispiel eine von den Induktionseinheiten 12a in der Ebene aufgespannte Fläche und eine von der Aufstellfläche 22a in der Ebene aufspannte Fläche im Wesentlichen deckungsgleich. Von den Induktionseinheiten 12a wird im Folgenden lediglich eine beschrieben.

Die Induktionseinheit 12a ist in einer Einbaulage unterhalb der Aufstellplatte 32a angeordnet. Die Induktionseinheit 12a ist dazu vorgesehen, auf der Aufstellplatte 32a oberhalb der Induktionseinheit 12a aufgestelltes Gargeschirr 38a zu erhitzen. Die Induktionseinheit 12a ist im vorliegenden Ausführungsbeispiel als Induktionsheizeinheit ausgebildet.

Die Induktionsvorrichtung 10a weist eine Bedienerschnittstelle 34a zu einer Eingabe und/oder Auswahl von Betriebsparametern auf (vgl. Figur 1), beispielsweise einer Heizleistung und/oder einer Heizleistungsdichte und/oder einer Heizzone. Die Bedienerschnittstelle 34a ist zu einer Ausgabe eines Werts eines Betriebsparameters an einen Bediener vorgesehen.

Die Induktionsvorrichtung 10a weist eine Steuereinheit 16a auf. Die Steuereinheit 16a ist dazu vorgesehen, in Abhängigkeit von mittels der Bedienerschnittstelle 34a eingegebenen Betriebsparametern Aktionen auszuführen und/oder Einstellungen zu verändern. Die Steuereinheit 16a regelt in einem Betriebszustand eine Energiezufuhr zu der Induktionseinheit 12a.

Die Steuereinheit 16a ist zu einer Auswertung und/oder Verarbeitung zumindest einer von einer Sensoreinheit 14a detektierten Sensorkenngröße vorgesehen. Die Induktionsvorrichtung 10a weist die Sensoreinheit 14a auf (vgl. Figuren 2 bis 6). In einer Einbaulage ist die Sensoreinheit 14a unterhalb der Aufstellplatte 32a angeordnet (vgl. Figur 2). Die Sensoreinheit 14a ist in einer Einbaulage oberhalb der Induktionseinheit 12a angeordnet. In einer Einbaulage ist die Sensoreinheit 14a zwischen der Induktionseinheit 12a und der Aufstellplatte 32a angeordnet.

Bei einer Betrachtung einer senkrechten Projektion der Aufstellfläche 22a, welche zumindest durch die Induktionseinheit 12a definiert ist, auf eine Ebene erstreckt sich die Sensoreinheit 14a über einen Flächenanteil von im Wesentlichen 100 % einer von der Aufstellfläche 22a in der Ebene aufgespannten Fläche. Bei einer senkrechten Projektion der Sensoreinheit 14a und der Aufstellfläche 22a in eine Ebene sind im vorliegenden Ausführungsbeispiel eine von der Sensoreinheit 14a in der Ebene aufgespannte Fläche und eine von der Aufstellfläche 22a in der Ebene aufspannte Fläche im Wesentlichen deckungsgleich.

Die Sensoreinheit 14a ist zu einer Detektion zumindest einer Sensorkenngröße vorgesehen. Im vorliegenden Ausführungsbeispiel ist die Sensoreinheit 14a zu einer Detektion von zumindest drei verschiedenen Sensorkenngrößen, insbesondere von zumindest drei verschiedenen Arten und/oder Typen an Sensorkenngrößen vorgesehen. Zu einer Detektion der drei verschiedenen Arten und/oder Typen an Sensorkenngrößen weist die Sensoreinheit 14a drei Sensorelemente 18a, 24a, 26a auf, welche jeweils zu einer Detektion einer der verschiedenen Arten und/oder Typen an Sensorkenngrößen vorgesehen sind.

Die Sensoreinheit 14a weist ein Substrat 36a auf (vgl. Figuren 2 bis 8). Die Sensorelemente 18a, 24a, 26a sind an dem Substrat 36a angeordnet. Beispielsweise könnten die Sensorelemente 18a, 24a, 26a auf das Substrat 36a aufgedruckt und/oder mittels Beschichtung auf das Substrat 36a aufgebracht sein.

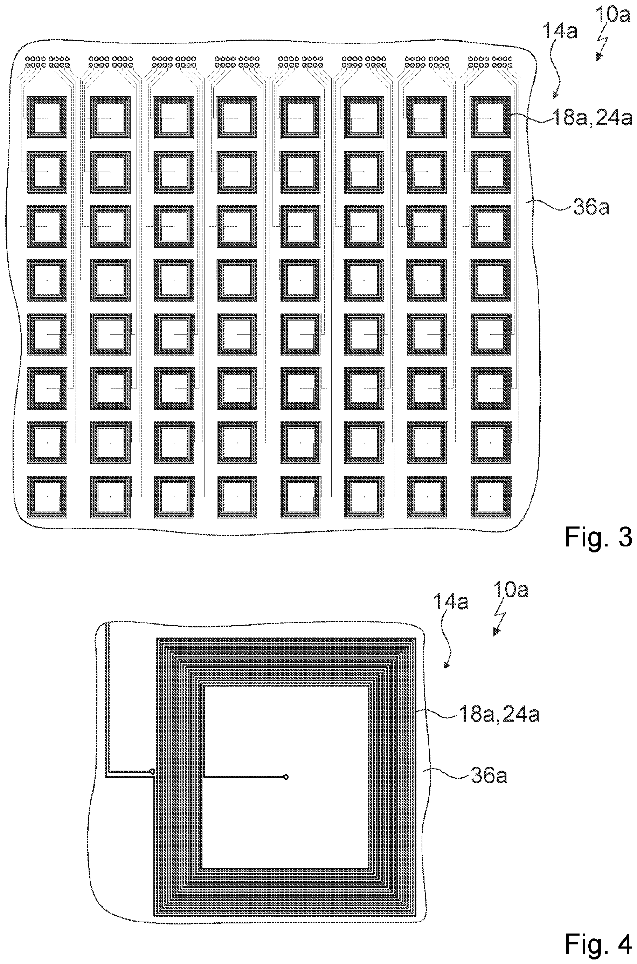

Die Sensoreinheit 14a weist eine Vielzahl an verteilt angeordneten Anwesenheitssensorelementen 18a auf (vgl. Figuren 3 und 4). Im vorliegenden Ausführungsbeispiel sind die Anwesenheitssensorelemente 18a matrixartig angeordnet. Eine Anzahl an Anwesenheitssensorelementen 18a ist wesentlich größer als eine Anzahl an Induktionseinheiten 12a.

Die Anwesenheitssensorelemente 18a sind zu einer Detektion zumindest einer als Anwesenheitskenngröße zumindest eines Gegenstands 20a ausgebildeten Sensorkenngröße vorgesehen. Der Gegenstand 20a ist Teil der Induktionsvorrichtung 10a. Zumindest ein Gegenstand 20a ist im vorliegenden Ausführungsbeispiel das Gargeschirr 38a. Die Anwesenheitssensorelemente 18a sind zu einer Detektion zumindest einer als Anwesenheitskenngröße des Gargeschirrs 38a ausgebildeten Sensorkenngröße vorgesehen. In dem Betriebszustand detektieren die Anwesenheitssensorelemente 18a zumindest eine als Anwesenheitskenngröße des Gegenstands 20a und/oder des Gargeschirrs 38a ausgebildete Sensorkenngröße.

Jedes der Anwesenheitssensorelemente 18a weist jeweils zumindest eine Induktionsspule auf. In dem Betriebszustand detektieren die Anwesenheitssensorelemente 18a die als Anwesenheitskenngröße des Gegenstands 20a und/oder des Gargeschirrs 38a ausgebildete Sensorkenngröße durch Änderung einer Impedanz und/oder einer Resonanzfrequenz der Induktionsspule.

Die Sensoreinheit 14a weist eine Vielzahl an verteilt angeordneten Aktivitätssensorelementen 24a auf (vgl. Figuren 3 und 4). Im vorliegenden Ausführungsbeispiel sind die Aktivitätssensorelemente 24a matrixartig angeordnet. Eine Anzahl an Aktivitätssensorelementen 24a ist wesentlich größer als eine Anzahl an Induktionseinheiten 12a.

Die Aktivitätssensorelemente 24a sind zu einer Detektion zumindest einer als Aktivitätskenngröße der Induktionseinheit 12a ausgebildeten Sensorkenngröße vorgesehen. In dem Betriebszustand detektieren die Aktivitätssensorelemente 24a zumindest eine als Aktivitätskenngröße der Induktionseinheit 12a ausgebildete Sensorkenngröße. Jedes der Aktivitätssensorelemente 24a weist jeweils zumindest eine Induktionsspule auf.

Eine Anzahl an Aktivitätssensorelementen 24a und eine Anzahl an Anwesenheitssensorelementen 18a sind identisch. Die Aktivitätssensorelemente 24a und die Anwesenheitssensorelemente 18a sind miteinander einstückig ausgebildet. Jeweils eines der Aktivitätssensorelemente 24a und jeweils eines der Anwesenheitssensorelemente 18a sind miteinander einstückig ausgebildet.

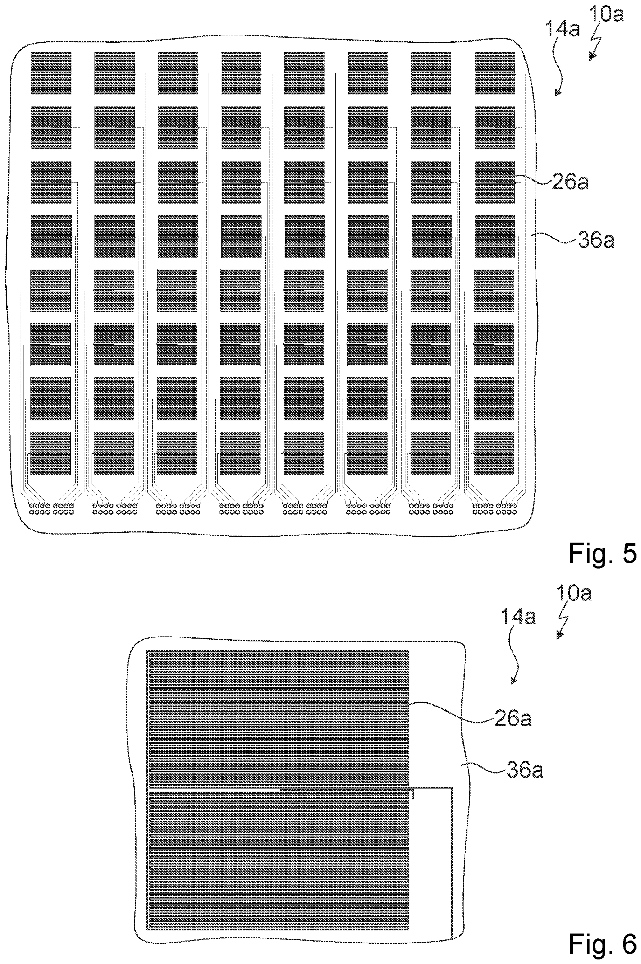

Die Sensoreinheit 14a weist eine Vielzahl an verteilt angeordneten Temperatursensorelementen 26a auf (vgl. Figuren 5 und 6). Im vorliegenden Ausführungsbeispiel sind die Temperatursensorelemente 26a matrixartig angeordnet. Eine Anzahl an Temperatursensorelemente 26a ist wesentlich größer als eine Anzahl an Induktionseinheiten 12a.

Die Temperatursensorelemente 26a sind zu einer Detektion zumindest einer als Temperaturkenngröße zumindest einer Einheit 28a ausgebildeten Sensorkenngröße vorgesehen. In dem Betriebszustand detektieren die Temperatursensorelemente 26a zumindest eine als Temperaturkenngröße zumindest einer Einheit 28a ausgebildete Sensorkenngröße.

Die Einheit 28a ist Teil der Induktionsvorrichtung 10a. Zumindest eine Einheit 28a ist im vorliegenden Ausführungsbeispiel die Aufstellplatte 32a. Die Temperatursensorelemente 26a sind zu einer Detektion zumindest einer als Temperaturkenngröße der Aufstellplatte 32a ausgebildeten Sensorkenngröße vorgesehen. In dem Betriebszustand detektieren die Temperatursensorelemente 26a zumindest eine als Temperaturkenngröße der Einheit 28a und/oder der Aufstellplatte 32a ausgebildete Sensorkenngröße. Jedes der Temperatursensorelemente 26a ist als ein RTD ausgebildet. Die Temperatursensorelemente 26 detektierten in dem Betriebszustand die als Temperaturkenngröße der Einheit 28a und/oder der Aufstellplatte 32a ausgebildete Sensorkenngröße durch Veränderung eines elektrischen Widerstands des jeweiligen Temperatursensorelements 26a in Abhängigkeit von einer Temperatur.

Eine Anzahl an Aktivitätssensorelementen 24a und eine Anzahl an Temperatursensorelementen 26a sind identisch. Eine Anzahl an Anwesenheitssensorelementen 18a und eine Anzahl an Temperatursensorelementen 26a sind identisch.

Jeweils eines der Anwesenheitssensorelemente 18a und jeweils eines der Temperatursensorelemente 26a sind voneinander verschieden ausgebildet. Jeweils eines der Aktivitätssensorelemente 24a und jeweils eines der Temperatursensorelemente 26a sind voneinander verschieden ausgebildet. Jedes der Anwesenheitssensorelemente 18a und jedes der Temperatursensorelemente 26a sind voneinander verschieden ausgebildet. Jedes der Aktivitätssensorelemente 24a und jedes der Temperatursensorelemente 26a sind voneinander verschieden ausgebildet.

Gemäss der Erfindung sind jeweils eines der Anwesenheitssensorelemente 18a und jeweils eines der Temperatursensorelemente 26a an voneinander verschiedenen Lagen des Substrats 36a der Sensoreinheit 14a angeordnet. Jeweils eines der Aktivitätssensorelemente 24a und jeweils eines der Temperatursensorelemente 26a sind an voneinander verschiedenen Lagen des Substrats 36a der Sensoreinheit 14a angeordnet. Jedes der Anwesenheitssensorelemente 18a und jedes der Temperatursensorelemente 26a sind an voneinander verschiedenen Lagen des Substrats 36a der Sensoreinheit 14a angeordnet. Jedes der Aktivitätssensorelemente 24a und jedes der Temperatursensorelemente 26a sind an voneinander verschiedenen Lagen des Substrats 36a der Sensoreinheit 14a angeordnet.

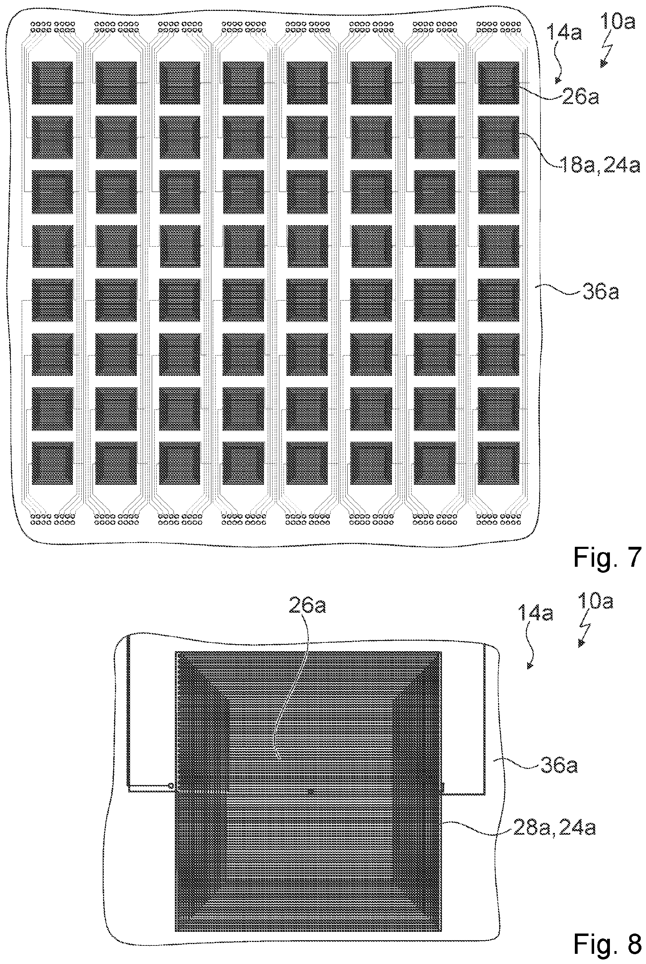

Bei einer Betrachtung einer senkrechten Projektion der Sensoreinheit 14a auf eine Ebene sind jeweils eines der Aktivitätssensorelemente 24a und jeweils eines der Temperatursensorelemente 26a abschnittsweise und vorteilhaft vollständig überlappend angeordnet (vgl. Figuren 7 und 8). Bei einer Betrachtung einer senkrechten Projektion der Sensoreinheit 14a auf eine Ebene sind jeweils eines der Anwesenheitssensorelemente 18a und jeweils eines der Temperatursensorelemente 26a abschnittsweise und vorteilhaft vollständig überlappend angeordnet.

Im vorliegenden Ausführungsbeispiel weist jedes der Anwesenheitssensorelemente 18a bei einer Betrachtung einer senkrechten Projektion der Sensoreinheit 14a auf eine Ebene jeweils eine Flächenerstreckung von im Wesentlichen 9 cm² in der Ebene auf. Jedes der Anwesenheitssensorelemente 18a weist bei einer Betrachtung einer senkrechten Projektion der Sensoreinheit 12a auf eine Ebene jeweils eine Flächenerstreckung von im Wesentlichen 3x3 cm² in der Ebene auf.

Im vorliegenden Ausführungsbeispiel weist jedes der Aktivitätssensorelemente 24a bei einer Betrachtung einer senkrechten Projektion der Sensoreinheit 14a auf eine Ebene jeweils eine Flächenerstreckung von im Wesentlichen 9 cm² in der Ebene auf. Jedes der Aktivitätssensorelemente 24a weist bei einer Betrachtung einer senkrechten Projektion der Sensoreinheit 12a auf eine Ebene jeweils eine Flächenerstreckung von im Wesentlichen 3x3 cm² in der Ebene auf.

Im vorliegenden Ausführungsbeispiel weist jedes der Temperatursensorelemente 26a bei einer Betrachtung einer senkrechten Projektion der Sensoreinheit 14a auf eine Ebene jeweils eine Flächenerstreckung von im Wesentlichen 9 cm² in der Ebene auf. Jedes der Temperatursensorelemente 26a weist bei einer Betrachtung einer senkrechten Projektion der Sensoreinheit 12a auf eine Ebene jeweils eine Flächenerstreckung von im Wesentlichen 3x3 cm² in der Ebene auf.

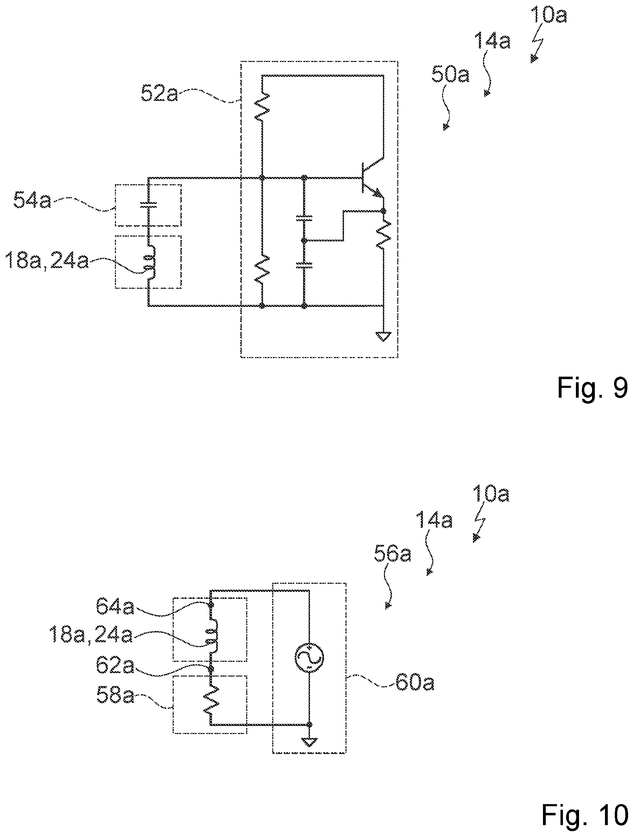

Die Sensoreinheit 14a weist eine Vielzahl an elektrischen Schwingkreisen 50a auf (vgl. Figur 9). Pro Anwesenheitssensorelement 18a weist die Sensoreinheit 14a im vorliegenden Ausführungsbeispiel einen elektrischen Schwingkreis 50a auf. Im Folgenden wird lediglich der dargestellte Schwingkreis 50a beschrieben.

Insbesondere pro Schwingkreis 50a weist die Sensoreinheit 14a eine Resonanzkapazität 54a auf. Die Resonanzkapazität 54a und das Anwesenheitssensorelement 18a, insbesondere die Induktionsspule des Anwesenheitssensorelements 18a, sind elektrisch in Reihe geschaltet. Im vorliegenden Ausführungsbeispiel ist die Resonanzkapazität 54a als ein Kondensator ausgebildet.

Die Sensoreinheit 14a weist, insbesondere pro Schwingkreis 50a, einen Oszillator 52a auf. Im vorliegenden Ausführungsbeispiel weist der Oszillator 52a einen Clapp-Oszillator auf.

Eines der Anwesenheitssensorelemente 18a, die Resonanzkapazität 54a und der Oszillator 52a sind Teil des Schwingkreises 50a. Wird ein Gegenstand 20a dem Anwesenheitssensorelement 18a genähert, detektiert das Anwesenheitssensorelement 18a, insbesondere durch Veränderung, vorteilhaft durch Erhöhung, einer Induktivität der Induktionsspule, den Gegenstand 20a.

Die Sensoreinheit 14a weist eine Vielzahl an elektrischen Treiberschaltkreisen 56a auf (vgl. Figur 10). Pro Anwesenheitssensorelement 18a weist die Sensoreinheit 14a im vorliegenden Ausführungsbeispiel einen elektrischen Treiberschaltkreis 56a auf. Im Folgenden wird lediglich der dargestellte Treiberschaltkreis 56a beschrieben.

Insbesondere pro Treiberschaltkreis 56a weist die Sensoreinheit 14a einen elektrischen Widerstand 58a auf. Der elektrische Widerstand 58a und das Anwesenheitssensorelement 18a, insbesondere die Induktionsspule des Anwesenheitssensorelements 18a, sind elektrisch in Reihe geschaltet. Im vorliegenden Ausführungsbeispiel ist der elektrische Widerstand 58a als ein elektrischer Querwiederstand ausgebildet.

Die Sensoreinheit 14a weist, insbesondere pro Treiberschaltkreis 56a, eine Energiequelle 60a auf. Die Energiequelle 60a ist zu einer Bereitstellung an elektrischer Energie für das Anwesenheitssensorelement 18a vorgesehen. In dem Betriebszustand betreibt die Steuereinheit 16a das Anwesenheitssensorelement 18a, insbesondere mittels der Energiequelle 60a, mit einer festen Frequenz. Die Steuereinheit 16a detektiert in dem Betriebszustand eine Impedanz des Anwesenheitssensorelements 18a.

Wird ein Gegenstand 20a dem Anwesenheitssensorelement 18a genähert, detektiert das Anwesenheitssensorelement 18a, insbesondere durch Veränderung, vorteilhaft durch Erhöhung, einer Induktivität der Induktionsspule, den Gegenstand 20a.

In dem Betriebszustand detektiert die Steuereinheit 16a eine elektrische Spannung an einem ersten Messpunkt 62a, welcher auf einer dem Widerstand 58a zugewandten Seite des Anwesenheitssensorelements 18a angeordnet ist. Die Steuereinheit 16a detektiert in dem Betriebszustand eine elektrische Spannung an einem zweiten Messpunkt 64a, welcher auf einer dem Widerstand 58a abgewandten Seite der Anwesenheitssensorelements 18a angeordnet ist. In dem Betriebszustand errechnet die Steuereinheit 16a aus den detektierten elektrischen Spannungen sowie aus dem elektrischen Widerstand 58a eine Impedanz des Anwesenheitssensorelements 18a.

Im Folgenden wird angenommen, die elektrische Spannung an dem ersten Messpunkt 62a sei V1 und die elektrische Spannung an dem zweiten Messpunkt 64a sei V2 und Rs sei der elektrische Widerstand 58a. Die Steuereinheit 16a ermittelt in dem Betriebszustand eine Impedanz Z des Anwesenheitssensorelements 18a mittels der nachfolgenden Formel:

$$Z = Rs \ (V2-V1)/V1$$

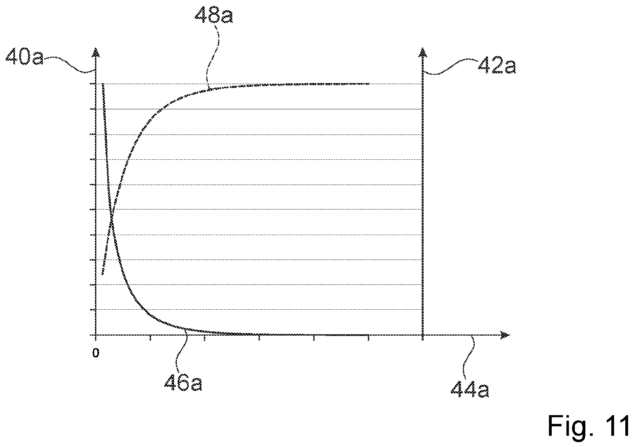

Figur 11 zeigt ein Diagramm, in welchem eine normierte Induktivität einer der Induktionsspulen und eine normierte Frequenz jeweils über einer normierten Entfernung der Sensoreinheit 14a zu dem Gegenstand 20a aufgetragen sind. Auf einer ersten Ordinatenachse 40a ist eine Induktivität einer der Induktionsspulen bezogen auf eine Induktivität der Induktionsspule unter Abwesenheit des Gegenstands 20a aufgetragen. Auf einer zweiten Ordinatenachse 42a ist eine Frequenz einer der Induktionsspulen bezogen auf eine Frequenz der Induktionsspule unter Abwesenheit des Gegenstands 20a aufgetragen. Auf einer Abszissenachse 44a ist eine Entfernung der Sensoreinheit 14a zu dem Gegenstand 20a bezogen auf eine maximale Erstreckung eines der Sensorelemente 18a, 24a, 26a aufgetragen. Im vorliegenden Ausführungsbeispiel beträgt die maximale Erstreckung eines der Sensorelemente 18a, 24a, 26a im Wesentlichen 3 cm.

Eine durchgezogen dargestellte Verlaufskurve 48a zeigt einen Verlauf der normierten Induktivität einer der Induktionsspulen. Eine gestrichelt dargestellte Verlaufskurve 46a zeigt einen Verlauf der normierten Frequenz einer der Induktionsspulen.

Aus Figur 11 ist ersichtlich, dass je näher der Gegenstand 20a der Sensoreinheit 14a kommt, desto geringer ist die Induktivität der Induktionsspule. Beispielsweise im Fall einer normierten Entfernung von 0,1, was im vorliegenden Ausführungsbeispiel insbesondere einer Entfernung des Gegenstands 20a von der Sensoreinheit 14a von im Wesentlichen 3 mm entspricht, nimmt die Induktivität der Induktionsspule in etwa einen Wert von 50 % eines Werts an, welchen die Induktivität der Induktionsspule bei einer Entfernung des Gegenstands 20a von der Sensoreinheit 14a von im Wesentlichen 30 mm annimmt.

Aus Figur 11 ist ersichtlich, dass je näher der Gegenstand 20a der Sensoreinheit 14a kommt, desto höher ist die Frequenz der Induktionsspule, und zwar insbesondere aufgrund der geringer werdenden Induktivität der Induktionsspule.

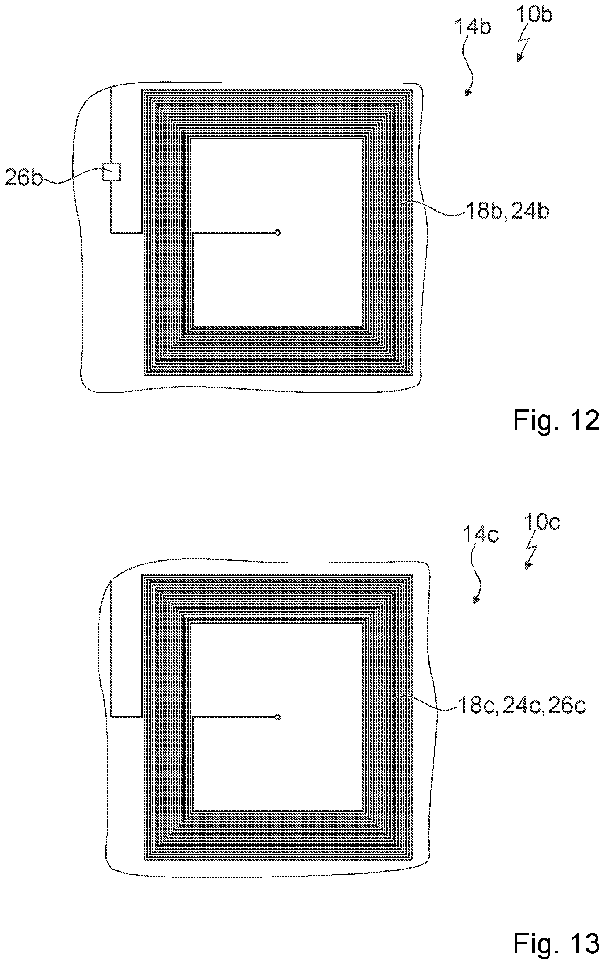

In Figuren 12 und 13 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 11 verwiesen werden kann. Zur Unterscheidung der Ausführungsbeispiele ist der Buchstabe a in den Bezugszeichen des Ausführungsbeispiels in den Figuren 1 bis 11 durch die Buchstaben b und c in den Bezugszeichen des Ausführungsbeispiels der Figuren 12 und 13 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 11 verwiesen werden.

Figur 12 zeigt einen Ausschnitt einer Sensoreinheit 14b einer alternativen Induktionsvorrichtung 10b. Die Sensoreinheit 14b weist eine Vielzahl an Anwesenheitssensorelementen 18b, eine Vielzahl an Aktivitätssensorelementen 24b und eine Vielzahl an Temperatursensorelementen 26a auf, von welchen jeweils lediglich eines dargestellt ist. Jeweils eines der Anwesenheitssensorelemente 18b und jeweils eines der Aktivitätssensorelemente 24b sind miteinander einstückig ausgebildet.

Jeweils eines der Anwesenheitssensorelemente 18b und jeweils eines der Temperatursensorelemente 26b sind voneinander verschieden ausgebildet. Jeweils eines der Aktivitätssensorelemente 24b und jeweils eines der Temperatursensorelemente 26b sind voneinander verschieden ausgebildet. Jedes der Anwesenheitssensorelemente 18b und jedes der Temperatursensorelemente 26b sind voneinander verschieden ausgebildet. Jedes der Aktivitätssensorelemente 24b und jedes der Temperatursensorelemente 26b sind voneinander verschieden ausgebildet.

Im vorliegenden Ausführungsbeispiel sind jeweils eines der Anwesenheitssensorelemente 18b und jeweils eines der Temperatursensorelemente 26b elektrisch in Reihe geschaltet. Jeweils eines der Aktivitätssensorelemente 24b und jeweils eines der Temperatursensorelemente 26b sind elektrisch in Reihe geschaltet.

Figur 13 zeigt einen Ausschnitt einer Sensoreinheit 14c einer alternativen Induktionsvorrichtung 10c. Die Sensoreinheit 14c weist eine Vielzahl an Anwesenheitssensorelementen 18c, eine Vielzahl an Aktivitätssensorelementen 24c und eine Vielzahl an Temperatursensorelementen 26c auf, von welchen jeweils lediglich eines dargestellt ist. Jeweils eines der Anwesenheitssensorelemente 18c und jeweils eines der Aktivitätssensorelemente 24c sind miteinander einstückig ausgebildet. Jeweils eines der Anwesenheitssensorelemente 18c und jeweils eines der Temperatursensorelemente 26c sind miteinander einstückig ausgebildet. Jeweils eines der Aktivitätssensorelemente 24c und jeweils eines der Temperatursensorelemente 26c sind miteinander einstückig ausgebildet.

Bezugszeichen

| | |
|---|---|
| 10 | Induktionsvorrichtung |
| 12 | Induktionseinheit |
| 14 | Sensoreinheit |
| 16 | Steuereinheit |
| 18 | Anwesenheitssensorelement |
| 20 | Gegenstand |
| 22 | Aufstellfläche |
| 24 | Aktivitätssensorelement |
| 26 | Temperatursensorelement |
| 28 | Einheit |
| 30 | Induktionsgerät |
| 32 | Aufstellplatte |
| 34 | Bedienerschnittstelle |
| 36 | Substrat |
| 38 | Gargeschirr |
| 40 | Erste Ordinatenachse |
| 42 | Zweite Ordinatenachse |
| 44 | Abszissenachse |
| 46 | Verlaufskurve |
| 48 | Verlaufskurve |
| 50 | Schwingkreis |
| 52 | Oszillator |
| 54 | Resonanzkapazität |
| 56 | Treiberschaltkreis |
| 58 | Widerstand |
| 60 | Energiequelle |
| 62 | Erster Messpunkt |
| 64 | Zweiter Messpunkt |

**Patentansprüche**

1. Induktionsvorrichtung, insbesondere Induktionskochfeldvorrichtung, mit zumindest einer Induktionseinheit (12a-c), mit zumindest einer Sensoreinheit (14a-c), welche zu einer Detektion zumindest einer Sensorkenngröße vorgesehen ist, und mit zumindest einer Steuereinheit (16a-c), welche zu einer Auswertung der Sensorkenngröße vorgesehen ist, , **wobei** die Sensoreinheit (14a-c) in einer Einbaulage oberhalb der Induktionseinheit (12a-c) angeordnet ist und eine Vielzahl an verteilt angeordneten Temperatursensorelementen (26a-c) aufweist, die zu einer Detektion zumindest einer als Temperaturkenngröße zumindest einer Einheit (28a-c) ausgebildeten Sensorkenngröße vorgesehen sind, **dadurch gekennzeichnet, dass** die Sensoreinheit (14a-c) eine Vielzahl an verteilt angeordneten Anwesenheitssensorelementen (18a-c) aufweist, die zu einer Detektion zumindest einer als Anwesenheitskenngröße zumindest eines Gegenstands (20a-c) ausgebildeten Sensorkenngröße vorgesehen sind, wobei zumindest eines der Anwesenheitssensorelemente (18a) und zumindest eines der Temperatursensor

elemente (26a) an voneinander verschiedenen Lagen zumindest eines Substrats (36a) der Sensoreinheit (14a) angeordnet sind.

2. Induktionsvorrichtung nach Anspruch 1, **dadurch gekennzeichnet, dass** sich die Sensoreinheit (14a-c) bei einer Betrachtung einer senkrechten Projektion einer Aufstellfläche (22a-c), welche zumindest durch die Induktionseinheit (12a-c) definiert ist, auf eine Ebene über einen Flächenanteil von mindestens 50 % einer von der Aufstellfläche (22a-c) in der Ebene aufgespannten Fläche erstreckt.

3. Induktionsvorrichtung nach Anspruch 1 oder 2, **dadurch gekennzeichnet, dass** die Sensoreinheit (14a-c) eine Vielzahl an verteilt angeordneten Aktivitätssensorelementen (24a-c) aufweist, die zu einer Detektion zumindest einer als Aktivitätskenngröße der Induktionseinheit (12a-c) ausgebildeten Sensorkenngröße vorgesehen sind.

4. Induktionsvorrichtung nach Anspruch 3, **dadurch gekennzeichnet, dass** zumindest eines der Aktivitätssensorelemente (24a-c) jeweils zumindest eine Induktionsspule aufweist.

5. Induktionsvorrichtung zumindest nach Anspruch 3, **dadurch gekennzeichnet, dass** zumindest eines der Aktivitätssensorelemente (24a-c) und zumindest eines der Anwesenheitssensorelemente (18a-c) miteinander einstückig ausgebildet sind.

6. Induktionsvorrichtung nach einem der vorhergehenden Ansprüche, **dadurch gekennzeichnet, dass** zumindest eines der Anwesenheitssensorelemente (18b) und zumindest eines der Temperatursensorelemente (26b) elektrisch in Reihe geschaltet sind.

7. Induktionsvorrichtung nach Anspruch 1 oder 5, **dadurch gekennzeichnet, dass** zumindest eines der Anwesenheitssensorelemente (18c) und zumindest eines der Temperatursensorelemente (26c) miteinander einstückig ausgebildet sind.

8. Induktionsvorrichtung nach einem der vorhergehenden Ansprüche, **dadurch gekennzeichnet, dass** zumindest eines der Anwesenheitssensorelemente (18a-c) und zumindest eines der Temperatursensorelemente (26a-c) bei einer Betrachtung einer senkrechten Projektion der Sensoreinheit (14a-c) auf eine Ebene wenigstens abschnittsweise überlappend angeordnet sind.

9. Induktionsvorrichtung nach einem der vorhergehenden Ansprüche, **dadurch gekennzeichnet, dass** eine Anzahl an Anwesenheitssensorelementen (18a-c) und eine Anzahl an Temperatursensorelementen (26a-c) identisch sind.

**10.** Induktionsvorrichtung nach einem der vorhergehenden Ansprüche, **dadurch gekennzeichnet, dass** zumindest eines der Temperatursensorelemente (26a-c) als Thermistor oder ein RTD ausgebildet ist.

**11.** Induktionsvorrichtung nach einem der vorhergehenden Ansprüche, **dadurch gekennzeichnet, dass** zumindest eines der Temperatursensorelemente (26a-c) bei einer Betrachtung einer senkrechten Projektion der Sensoreinheit (14a-c) auf eine Ebene eine Flächenerstreckung von maximal 25 cm² in der Ebene aufweist.

**12.** Induktionsgerät, insbesondere Induktionskochfeld, mit zumindest einer Induktionsvorrichtung (10a-c) nach einem der vorhergehenden Ansprüche.

**Claims**

**1.** Induction device, in particular an induction hob device, with at least one induction unit (12a-c), with at least one sensor unit (14a-c), which is provided to detect at least one sensor parameter, and with at least one control unit (16a-c), which is provided to analyse the sensor parameter, **wherein** in a mounted position the sensor unit (14a-c) is arranged above the induction unit (12a-c) and has a plurality of temperature sensor elements (26a-c) arranged in a distributed manner, which are provided to detect at least one sensor parameter in the form of a temperature parameter of at least one unit (28a-c), **characterised in that** the sensor unit (14a-c) has a plurality of presence sensor elements (18a-c) arranged in a distributed manner, which are provided to detect at least one sensor parameter in the form of a presence parameter of at least one object (20a-c), wherein at least one of the presence sensor elements (18a) and at least one of the temperature sensor elements (26a) are arranged on different layers of at least one substrate (36a) of the sensor unit (14a).

**2.** Induction device according to claim 1, **characterised in that,** when looking at a perpendicular projection of a placement surface (22a-c), which is at least defined by the induction unit (12a-c), onto one plane, the sensor unit (14a-c) extends over a surface portion of at least 50% of a surface spanned by the placement surface (22a-c) in the plane.

**3.** Induction device according to claim 1 or 2, **characterised in that** the sensor unit (14a-c) has a plurality of activity sensor elements (24a-c) arranged in a distributed manner, which are provided to detect at least one sensor parameter in the form of an activity parameter of the induction unit (12a-c).

**4.** Induction device according to claim 3, **characterised in that** at least one of the activity sensor elements (24a-c) respectively has at least one induction coil.

**5.** Induction device at least according to claim 3, **characterised in that** at least one of the activity sensor elements (24a-c) and at least one of the presence sensor elements (18a-c) are configured as a single piece with one another.

**6.** Induction device according to one of the preceding claims, **characterised in that** at least one of the presence sensor elements (18b) and at least one of the temperature sensor elements (26b) are connected electrically in series.

**7.** Induction device according to claim 1 or 5, **characterised in that** at least one of the presence sensor elements (18c) and at least one of the temperature sensor elements (26c) are configured as a single piece with one another.

**8.** Induction device according to one of the preceding claims, **characterised in that,** when looking at a perpendicular projection of the sensor unit (14a-c) onto one plane, at least one of the presence sensor elements (18a-c) and at least one of the temperature sensor elements (26a-c) are arranged so that they overlap at least in sections.

**9.** Induction device according to one of the preceding claims, **characterised in that** a number of presence sensor elements (18a-c) and a number of temperature sensor elements (26a-c) are identical.

**10.** Induction device according to one of the preceding claims, **characterised in that** at least one of the temperature sensor elements (26a-c) is configured as a thermistor or RTD.

**11.** Induction device according to one of the preceding claims, **characterised in that,** when looking at a perpendicular projection of the sensor unit (14a-c) onto one plane, at least one of the temperature sensor elements (26a-c) has a surface extension of maximum 25 cm² in the plane.

**12.** Induction appliance, in particular an induction hob, with at least one induction device (10a-c) according to one of the preceding claims.

**Revendications**

**1.** Dispositif à induction, en particulier dispositif de cuisson à induction avec au moins une unité à induction (12a-c), avec au moins une unité de capteurs (14a-c) prévue pour une détection d'au moins une caractéristique de capteur et avec au moins une unité de commande (16a-c) prévue pour une évaluation de la caractéristique de capteur, dans lequel l'unité de capteurs (14a-c) est disposée, dans une position d'installation, au-dessus de l'unité à induction (12a-c) et présente une pluralité d'éléments de capteur de température (26a-c) disposés de façon répartie, prévus pour une détection d'au moins une caractéristique de capteur formée sous forme de caractéristique de température d'au moins une unité (28a-c), **caractérisé en ce que** l'unité de capteurs (14a-c) présente une pluralité d'éléments de capteur de présence (18a-c) disposés de façon répartie, prévus pour une détection d'au moins une caractéristique de capteur formée sous forme de caractéristique de présence d'au moins un objet (20a-c), dans lequel au moins l'un des éléments de capteur de présence (18a) et au moins l'un des éléments de capteur de température (26a) sont disposés sur des couches différentes d'au moins un substrat (36a) de l'unité de capteurs (14a).

2. Dispositif à induction selon la revendication 1, **caractérisé en ce que** lors d'une observation d'une projection perpendiculaire sur un plan d'une surface de pose (22a-c) définie au moins par l'unité à induction (12a-c), l'unité de capteurs (14a-c) s'étend sur une portion de surface d'au moins 50 % d'une surface définie par la surface de pose (22a-c) dans le plan.

3. Dispositif à induction selon la revendication 1 ou 2, **caractérisé en ce que** l'unité de capteurs (14a-c) présente une pluralité d'éléments de capteur d'activité (24a-c) disposés de façon répartie, prévus pour une détection d'au moins une caractéristique de capteur formée sous forme de caractéristique d'activité de l'unité à induction (12a-c).

4. Dispositif à induction selon la revendication 3, **caractérisé en ce qu'**au moins l'un des éléments de capteur d'activité (24a-c) présente respectivement au moins une bobine d'induction.

5. Dispositif à induction au moins selon la revendication 3, **caractérisé en ce qu'**au moins l'un des éléments de capteur d'activité (24a-c) et au moins l'un des éléments de capteur de présence (18a-c) sont formés en une seule pièce.

6. Dispositif à induction selon l'une des revendications précédentes, **caractérisé en ce qu'**au moins l'un des éléments de capteur de présence (18b) et au moins l'un des éléments de capteur de température (26b) sont raccordés en série.

7. Dispositif à induction selon la revendication 1 ou 5, **caractérisé en ce qu'**au moins l'un des éléments de capteur de présence (18c) et au moins l'un des éléments de capteur de température (26c) sont formés en une seule pièce.

8. Dispositif à induction selon l'une des revendications précédentes, **caractérisé en ce qu'**au moins l'un des éléments de capteur de présence (18a-c) et au moins l'un des éléments de capteur de température (26a-c) sont disposés de façon chevauchante au moins par sections, lors d'une observation d'une projection perpendiculaire de l'unité de capteurs (14a-c) sur un plan.

9. Dispositif à induction selon l'une des revendications précédentes, **caractérisé en ce qu'**un nombre d'éléments de capteur de présence (18a-c) et un nombre d'éléments de capteur de température (26a-c) sont identiques.

10. Dispositif à induction selon l'une des revendications précédentes, **caractérisé en ce qu'**au moins l'un des éléments de capteur de température (26a-c) est formé sous la forme d'un thermistor ou d'un capteur de température à résistance.

11. Dispositif à induction selon l'une des revendications précédentes, **caractérisé en ce qu'**au moins l'un des éléments de capteur de température (26a-c) présente, lors d'une observation d'une projection perpendiculaire de l'unité de capteurs (14a-c) sur un plan, une étendue surfacique maximale de 25 cm$^2$ dans le plan.

12. Appareil à induction, en particulier champ de cuisson à induction, avec au moins un dispositif à induction (10 a-c) selon l'une des revendications précédentes.

22a    28a, 32a

20a, 38a

34a    16a

10a    30a

Fig. 1

20a, 38a

28a, 32a

10a    30a

14a

12a    36a

Fig. 2

Fig. 3

Fig. 4

14a 10a

26a

36a

Fig. 5

10a

14a

26a

36a

Fig. 6

Fig. 7

Fig. 8

52a

54a

18a,24a

Fig. 9

10a

14a

50a

64a

18a,24a

62a

58a

56a

14a

10a

60a

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016046676 A1